# EUROPEAN PATENT APPLICATION

(11) **EP 4 071 953 A1**
(43) Date of publication of application: **12.10.2022**
(21) Application number: 21782179.2
(22) Date of filing: 26.02.2021
(51) Int. Cl.: H02H 7/18, H01M 10/48, H01M 50/20, H02J 7/00

(54) **BATTERY PACK AND ELECTRICAL APPARATUS USING SAME**

(30) Priority: 31.03.2020 JP 2020062071
(71) Applicant: Koki Holdings Co., Ltd., Tokyo 108-6020 (JP)
(72) Inventor: YAMAGUCHI, Satoshi, Hitachinaka-City Ibaraki 3128502 (JP); SAKAMOTO, Mitsutaka, Hitachinaka-City Ibaraki 3128502 (JP); HANAWA, Hiroyuki, Hitachinaka-City Ibaraki 3128502 (JP)
(74) Representative: Parker, Andrew James
(86) International application number: PCT/JP2021/007392
(87) International publication number: WO 2021/199817

(57) **Abstract**

The present invention detects a predictive abnormal phenomenon in a battery pack and prevents the use of the battery pack before power is shut off at a fuse. The battery pack comprises: a battery cell; a connection unit which is electrically connected to the battery cell and is connected to an external electrical apparatus main body; and a control unit which controls the battery cell, wherein, when detecting an abnormal state such as chattering, the control unit causes a charge prevention signal (LS) and a discharge prevention signal (LD) to be continuously output and makes the charge and discharge of the battery pack impossible (steps 226-228). The continuous output of these signal prevention signals is configured not to be negated by an operation of a user, and the battery pack can be made unusable by software control.

## Description

### [Technical Field]

The present invention relates to a battery pack and/or an electrical apparatus that can switch between a low output and a high output, in which it is intended to reduce the size thereof by combining battery cells having different capacities.

### [Background Art]

As a power source for electrical apparatuses such as electric tools, a battery pack using a secondary battery such as a lithium ion battery is widely used. The battery pack is attachable to and detachable from the electrical apparatus main body, and when the voltage decreases due to discharging, the battery pack is removed from the electrical apparatus main body and charged using an external charging device. The conventional battery pack is provided with a safety mechanism that stops the continuation of use of the battery pack when an abnormality such as a short circuit occurs. As a typical safety mechanism, there is a fuse (power fuse) provided in the power transmission path. A fuse is an electronic component that prevents damage to a loading part, a power supply part, and the like due to an excessive current by shutting off a metal component interposed in the power path when an excessive current flows in the power path. In a conventional battery pack, when a current which is equal to or more than the rating flows in the power path, the alloy components contained in the fuse are melted and cut by Joule heating. The power shutoff by the fuse is irreversible and cannot be restored by electrical control.

One of the minor anomalies that can normally occur in a battery pack is the so-called "overdischarge" and "overcharge" states. "Overdischarge" is a state where the battery pack is discharged to a specified lower limit voltage or a lower limit capacity or less when the battery pack is used in an electric tool main body that serves as an electrical apparatus main body. When this state is reached, the battery pack is made unusable (not able to be discharged) by the control of the electric circuit built into the battery pack (discharging prevented state). In order to perform this control, for example, an LD signal (abnormal signal) is exchanged between the battery pack and the electrical apparatus main body. Regarding the discharging prevented state, the discharging prevented state is automatically negated by a microcomputer of the control unit of the battery pack when the voltage of the battery cell is restored by charging with an external charging device that serves as the electrical apparatus main body.

"Overcharge" is a state where the specified upper limit voltage or upper limit charge capacity is reached when the battery pack is being charged using an external charging device that serves as the electrical apparatus main body. When this state is reached, the battery pack is made unchargeable by the control of the electric circuit built into the battery pack (charging prevented state). In order to perform this control, for example, an LS signal (abnormal signal) is exchanged between the battery pack and the electrical apparatus main body. Regarding the charging prevented state, when the battery pack is used while being mounted on the electric tool main body that serves as the electrical apparatus main body and the voltage of the battery cell decreases from the fully charged state, the charging prevented state is automatically negated by the microcomputer of the control unit of the battery pack.

### [Citation List]

### [Patent Literature]

[Patent Literature 1]
Japanese Patent Laid-Open No. 2019-004631

### [Summary of Invention]

### [Technical Problem]

In the conventional battery pack, two types of shutoff are performed: irreversible power shutoff (shutoff by a fuse) that cannot be restored by electrical control; and reversible power shutoff (shutoff control by the LD signal and the LS signal) that can be restored by electrical control. According to the studies of the inventors, it was found that, before reaching an abnormal state where irreversible power shutoff occurs, a transient phenomenon before a fatal short circuit phenomenon occurred at the short-circuited part, for example, a predictive phenomenon such as so-called chattering occurred in which the two parts about to be short-circuited repeatedly briefly came into contact with each other and separated from each other. Therefore, the inventors have postulated that, before the occurrence of such a predictive phenomenon is detected and power is shut off by the fuse irreversibly, it would be possible to inhibit damage to the battery pack or the electrical apparatus main body if the battery pack could be made unusable by a method other than the fuse means.

The present invention has been made in view of the above background, and an objective thereof is to provide a battery pack and an electrical apparatus using the same that can detect a predictive abnormal phenomenon at an early stage so as to prevent the use of a battery pack before power is shut off irreversibly. Another objective of the present invention is to provide a battery pack and an electrical apparatus using the same that has a function of detecting the occurrence of a predictive abnormal phenomenon while any increase in the manufacturing cost of the battery pack is curbed. Still another objective of the present invention is to provide a battery pack and an electrical apparatus using the same that can accurately detect a short circuit state in the connection terminal part in a battery pack having a plurality of connection terminals.

### [Solution to Problem]

The following is a description of typical features of the invention disclosed in the present application. According to an aspect of the present invention, there is provided a battery pack including: a battery cell; a connection unit which is electrically connected to the battery cell and is connected to an external electrical apparatus main body; and a control unit which controls discharging or charging of the battery cell, in which, the control unit stops or prevents the discharging or charging of the battery cell in a case of a predetermined abnormal state related to the battery pack. Then, the control unit maintains a stopped or prevented state of the discharging or charging of the battery cell even when the battery pack is no longer in the predetermined abnormal state after the predetermined abnormal state is determined. The predetermined abnormal state is a case where one or a plurality of physical quantities related to at least one of a voltage of the battery cell, a current flowing through the battery cell, and a temperature of the battery cell satisfies predetermined conditions. The predetermined conditions include a case where the voltage of the battery cell becomes lower than a predetermined value plural times within a predetermined period of time, or a case where the current flowing through the battery cell becomes equal to or more than a predetermined value plural times within a predetermined period of time. In this manner, the control unit stops or prevents charging and discharging in a case of the predetermined abnormal state in a state of being connected to the electrical apparatus main body, and then maintains the stopped or prevented state of the charging and discharging even when the predetermined abnormal state is negated.

According to another aspect of the present invention, the control unit outputs a charge prevention signal that prevents charging of the battery cell, or outputs a discharge prevention signal that prevents discharging of the battery cell, and prevents charging of the battery cell even when the battery pack is removed from the electrical apparatus main body and is connected to a charging device. The battery pack includes a charge prevention signal output circuit for transmitting the charge prevention signal, or a discharge prevention signal output circuit for transmitting the discharge prevention signal. The connection unit (terminal part) of the battery pack includes a charge prevention signal output terminal that outputs the charge prevention signal transmitted through the charge prevention signal output circuit to the charging device, or a discharge prevention signal output terminal that outputs the discharge prevention signal transmitted through the discharge prevention signal output circuit to the electrical apparatus main body. Further, the control unit of the battery pack performs any control of (1) maintaining an output of the charge prevention signal once the charge prevention signal is output, or outputting the charge prevention signal again when the charging device is connected, and (2) maintaining an output of the discharge prevention signal once the discharge prevention signal is output, or outputting the discharge prevention signal again when the electrical apparatus main body is connected.

According to still another aspect of the present invention, a fuse is provided between the battery cell and the connection unit (terminal part), and two types of shutoff functions are provided including a function of shutting off an overcurrent by the fuse and a function of preventing the charging and discharging by electrical control of the control unit. The connection unit includes a signal terminal that outputs the charge prevention signal and the discharge prevention signal from the control unit, and the control unit negates the charge prevention signal and the discharge prevention signal when the abnormal state is temporary, and does not negate the charge prevention signal when the abnormal state continues to occur. Furthermore, at least first and second cell units are provided as a cell unit in which a plurality of the battery cells is connected to each other in series, and a series connection state where the first and second cell units are connected to each other in series in a state where the first cell unit is connected on a higher voltage side of the second cell unit, and a parallel connection state are switched therebetween, and either the series connection state or the parallel connection state is selected depending on a terminal form of the electrical apparatus main body.

According to still another aspect of the present invention, there is provided a battery pack including: a battery cell; a connection unit (terminal part) which is electrically connected to the battery cell and is connected to an external electrical apparatus main body; and a control unit which controls the battery cell, in which the control unit prevents charging and discharging of the battery cell when a short circuit for a short period of time due to chattering of the connection unit is detected, and maintains the prevented state even when the battery pack is connected to a charging device that serves as the electrical apparatus main body. In the battery pack, when an abnormal state occurs in a state of being connected to the external electrical apparatus main body, the control unit prevents charging and discharging of the battery cell and does not negate the prevented state by an operation of a user. In the battery pack: at least first and second cell units are provided as a cell unit in which a plurality of battery cells is connected to each other in series, when a short circuit occurs between the cell units, before completely shutting off a discharge path or a charge path of the cell unit, the discharge path or the charge path is shut off under predetermined conditions. The battery pack includes: a control unit; and a fuse provided in the discharge path or the charge path. When a short circuit occurs between the cell units, before completely shutting off the discharge path or the charge path by the fuse, the control unit shuts off the discharge path or the charge path. The shutoff by the control unit is not negated by an operation of a user. An electrical apparatus is configured by mounting such battery packs to an electrical apparatus main body including a battery pack mounting part where the battery pack is attachable and detachable, an apparatus-side terminal part connected to the connection unit, and a loading part driven by electric power supplied from the battery pack.

### [Advantageous Effects of Invention]

According to the present invention, a predictive phenomenon such as chattering that occurs in the vicinity of the connection unit (terminal part) of the battery pack occurs at an early stage. Accordingly, the battery pack can be brought into a use prevented state by the control of the control unit at an earlier stage than with power shutoff by the fuse. As a result, it is possible to prevent a complete terminal short circuit of the battery pack in advance. Furthermore, since the detection control of the predictive phenomenon is realized by the software executed by the control unit of the battery pack, the present invention can be carried out without changing the configuration on the electrical apparatus main body side.

### [Brief Description of Drawings]

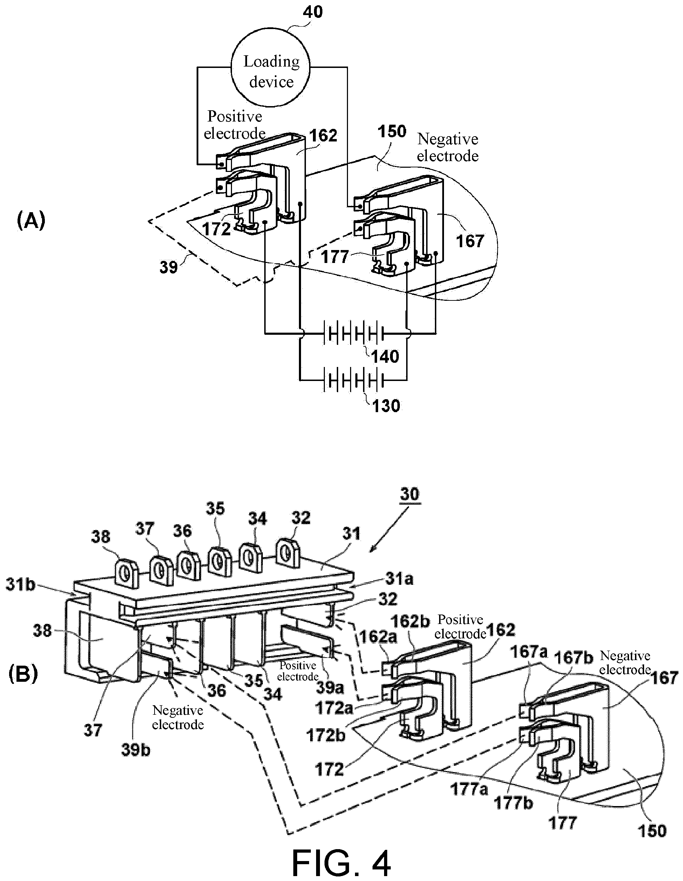

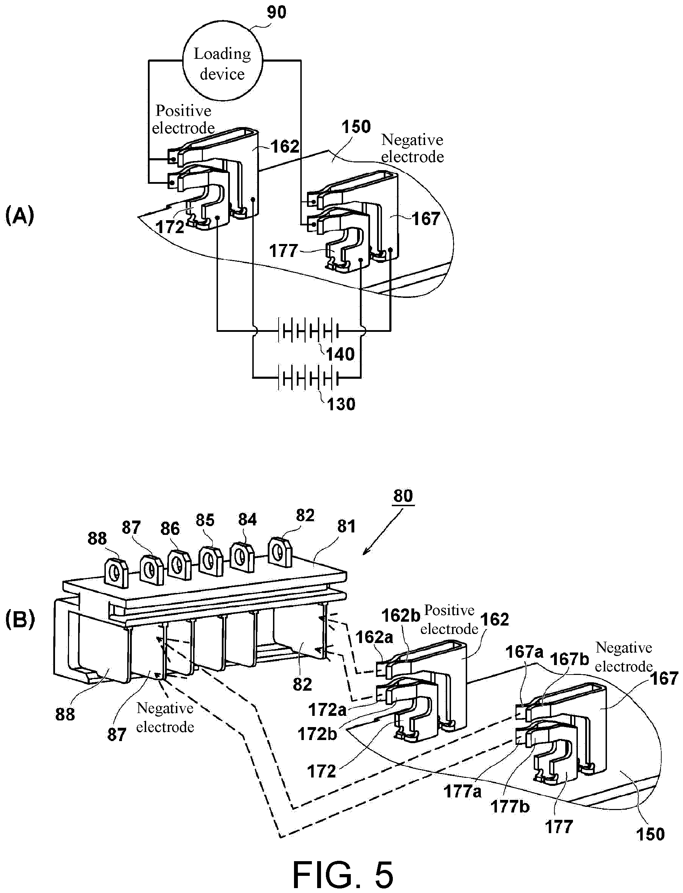

Fig. 1 is a perspective view of an electric tool main body 1 on which a battery pack 100 according to an example of the present invention is mounted.
Fig. 2 is a perspective view of the battery pack 100 according to the example of the present invention.
Fig. 3 is a developed perspective view of the battery pack 100 of Fig. 2.
   (A) of Fig. 4 is a partial perspective view showing shapes of positive electrode terminals (162 and 172) and negative electrode terminals (167 and 177), and a view showing a connection circuit at the time of high voltage output, and (B) of Fig. 4 is a partial perspective view showing a connection status between a terminal part 30 of a high-voltage electrical apparatus and a terminal on the battery pack 100 side.
   (A) of Fig. 5 is a partial perspective view showing shapes of positive electrode terminals (162 and 172) and negative electrode terminals (167 and 177), and a view showing a connection circuit at the time of low voltage output, and (B) of Fig. 5 is a partial perspective view showing a connection status between a terminal part 80 of a low-voltage electrical apparatus and a terminal on the battery pack 100 side.

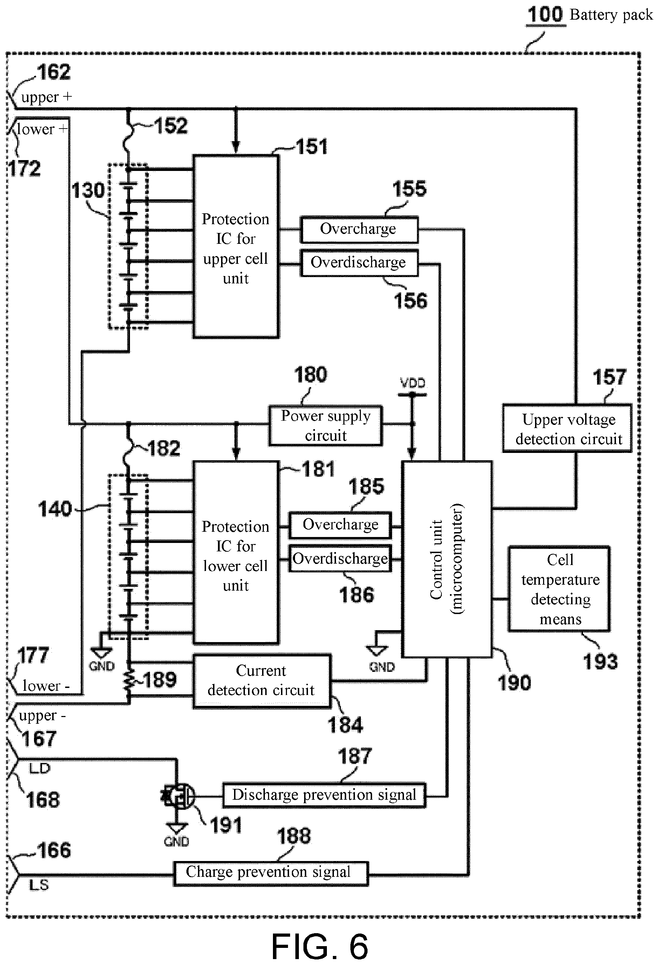

Fig. 6 is a circuit diagram of the battery pack 100 of the present example.

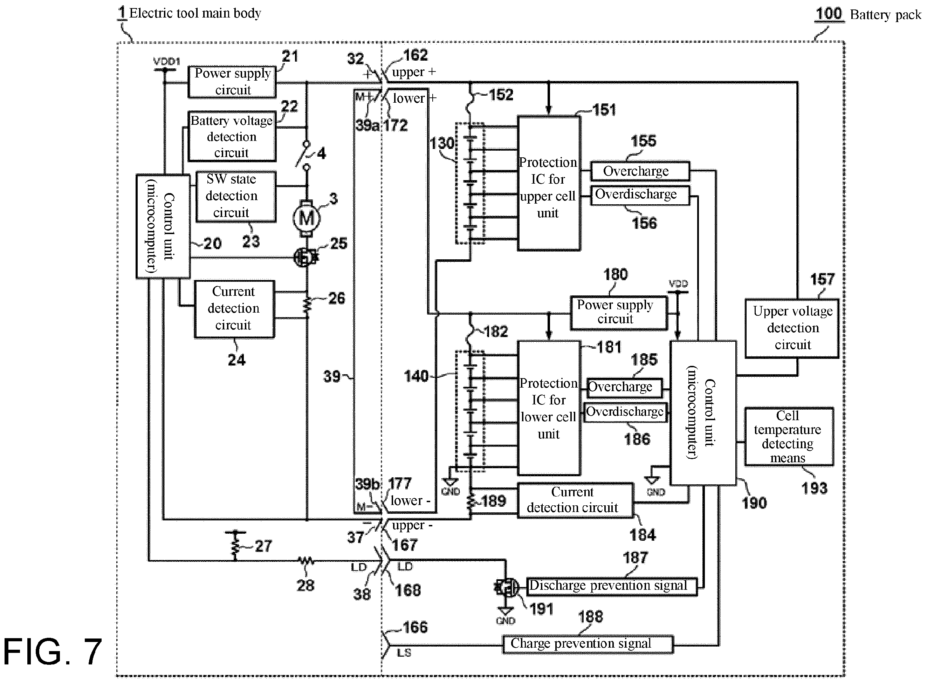

Fig. 7 is a circuit diagram when the battery pack 100 of the present example and an electrical apparatus main body (electric tool main body 1) for high voltage are connected to each other.

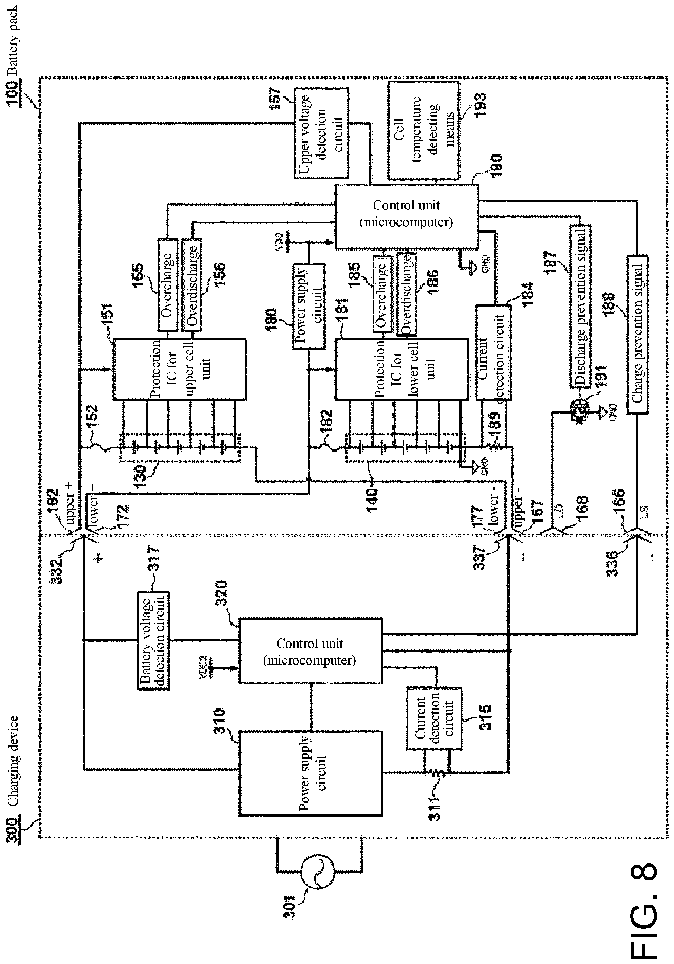

Fig. 8 is a circuit diagram when the battery pack 100 of the present example and an external charging device 300 are connected to each other.

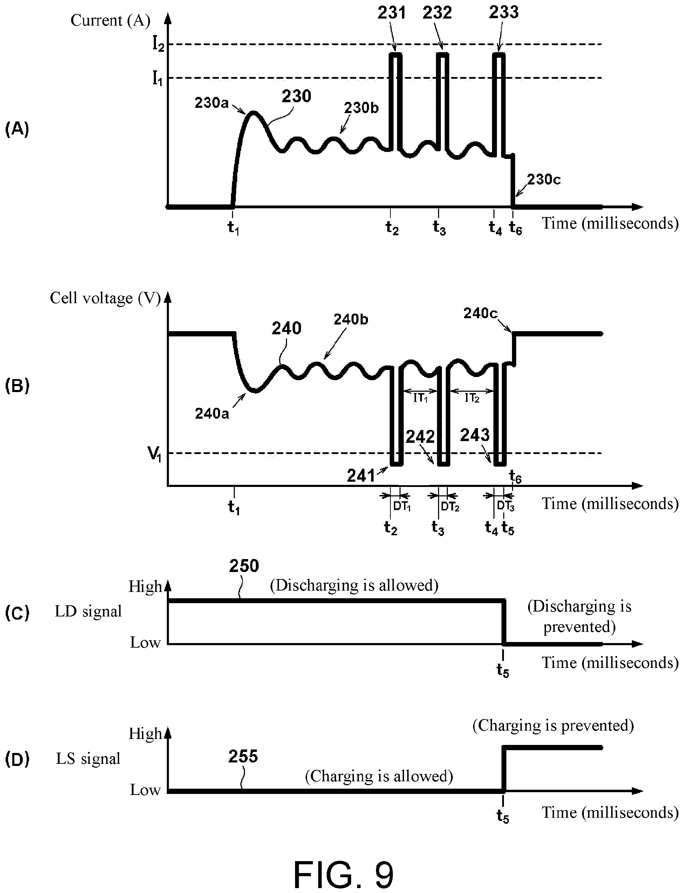

Fig. 9 is a view showing each signal waveform when a chattering phenomenon occurs in the battery pack 100 of the present example.

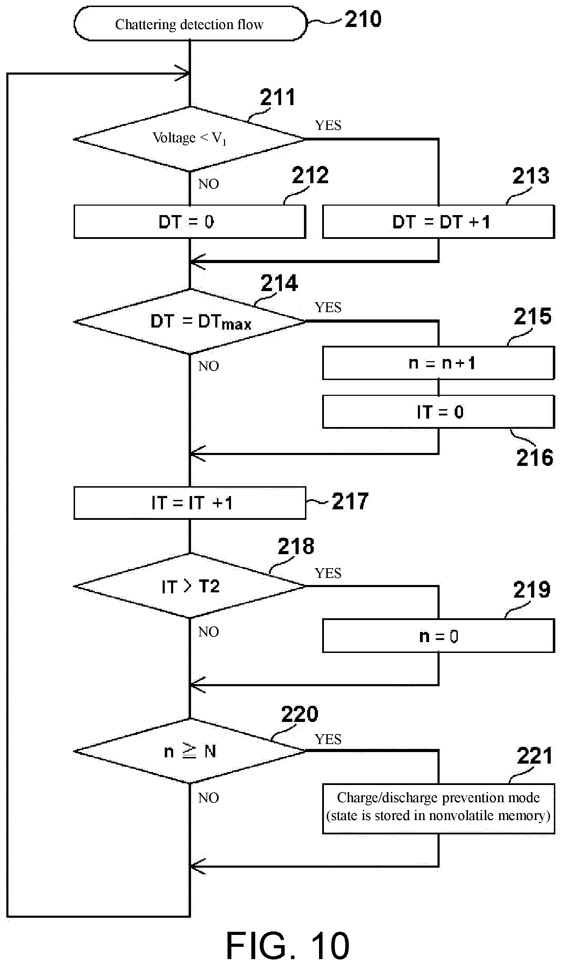

Fig. 10 is a flowchart showing a detection procedure of the chattering phenomenon in the battery pack 100 of the present example.

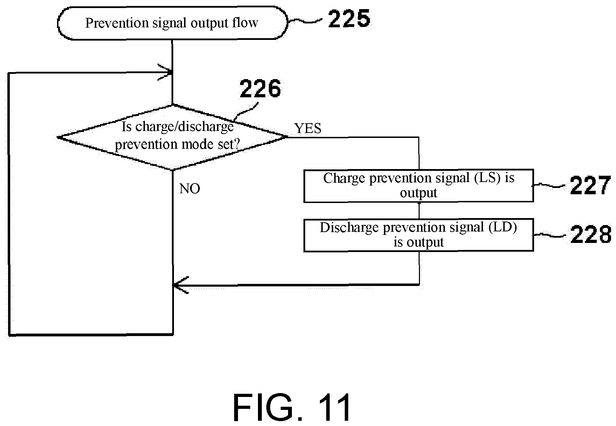

Fig. 11 is a flowchart showing a control procedure after the chattering phenomenon is detected in the battery pack 100 of the present example.

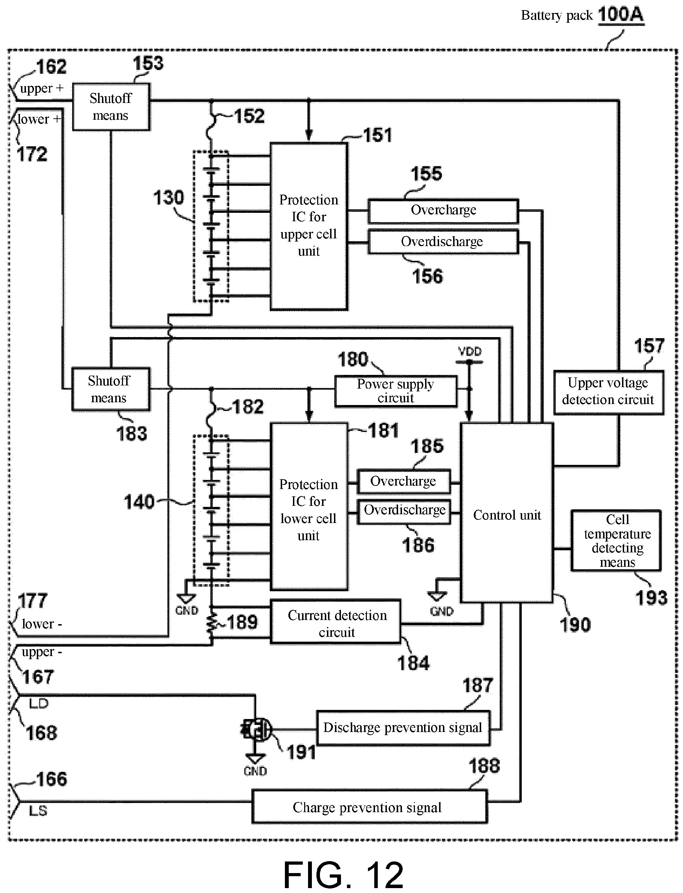

Fig. 12 is a circuit diagram of a battery pack 100A according to a second example of the present invention.

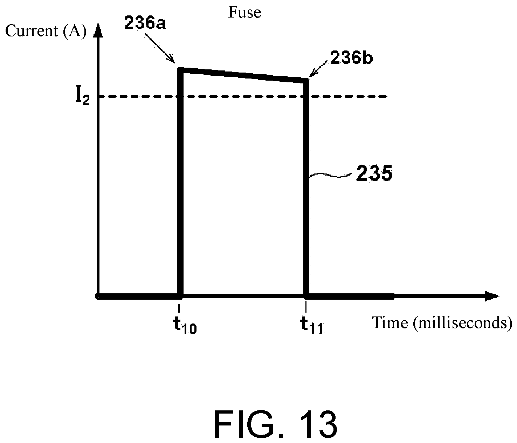

Fig. 13 is a waveform diagram for describing a power shutoff state by a fuse of the related art.

### [Description of Embodiments]

### Example 1

Hereinafter, examples of the present invention will be described with reference to the drawings. In the following drawings, the same parts will be given the same reference numerals, and the repeating description will be omitted. In this specification, as an example of an electrical apparatus, an electric tool operated by a battery pack will be used for the description.

It is a perspective view of an electric tool main body 1 on which a battery pack 100 according to an example of the present invention is mounted. There are various types of electric tools, which is a form of an electrical apparatus. In addition to widely used electric tools that use battery packs having a rated voltage of 18 V, an electric tool using the battery pack 100 having a rated voltage 36 V that provides higher output is commercially available. Further, a battery pack compatible with a plurality of voltages that can be mounted on both an electric tool main body having a rated voltage of 18 V and the electric tool main body 1 having a rated voltage of 36 V has been made commercially available by the applicant.

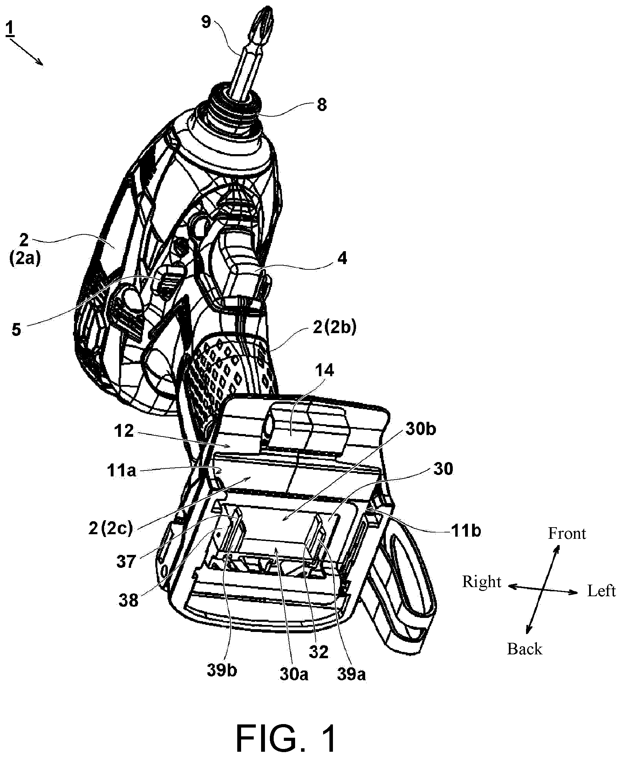

The electric tool main body 1 shown in Fig. 1 is called an impact tool, and a tip tool 9 such as a bit is mounted on an output shaft, and fastening work is performed by applying a rotational force or a striking force in the shaft direction to the tip tool. The electric tool main body 1 includes a housing 2 which is an outer frame that forms an outer shape. The housing 2 is formed to have a substantially tubular body part 2a and a handle part 2b extending in an orthogonal direction (downward) from the vicinity of the center of the body part 2a in the shaft direction. An anvil (not shown in the drawing), which is an output shaft, is provided on the front side of the housing 2, a hexagonal hole (not shown) having a hexagonal cross section is formed on the output shaft, and a one-touch type tip tool holding part 8 for mounting the tip tool 9 is provided at the tip of the output shaft. Here, a cross-recessed screwdriver bit is mounted as the tip tool 9. A trigger-shaped trigger switch 4 is provided on a part of the handle part 2b that is, in the vicinity of where the index finger comes into contact when the operator grips the handle part 2b. A forward/reverse switching lever 5 for switching the rotation direction of the output shaft is provided in the vicinity of the trigger switch 4. A battery pack mounting part 2c for mounting the battery pack 100 is formed below the handle part 2b.

The battery pack mounting part 2c is formed to have rail parts 11a and 11b including groove parts extending parallel to each other in the front-rear direction at the inner wall parts on both the left and right sides, and a terminal part 30 is provided therebetween. The terminal part 30 is manufactured by integrally molding a non-conductor material such as a synthetic resin, and a plurality of metal terminals, such as a positive electrode input terminal 32, a negative electrode input terminal 37, and an LD terminal (abnormal signal terminal) 38, is cast therein. Furthermore, a U-shaped short bar for short-circuiting a lower positive electrode terminal 172 (will be described later in Fig. 4) and a lower negative electrode terminal 177 (will be described later in Fig. 4) of the battery pack 100 is cast, one end of the short bar is a short circuit terminal 39a and the other end is a short circuit terminal 39b. Here, the short circuit terminal 39a is disposed to be separated from the lower side of the positive electrode input terminal 32, and the short circuit terminal 39a is disposed to be separated from the lower side of the negative electrode input terminal 37. Furthermore, the connection terminals for other signals, which will be described later, are not shown here.

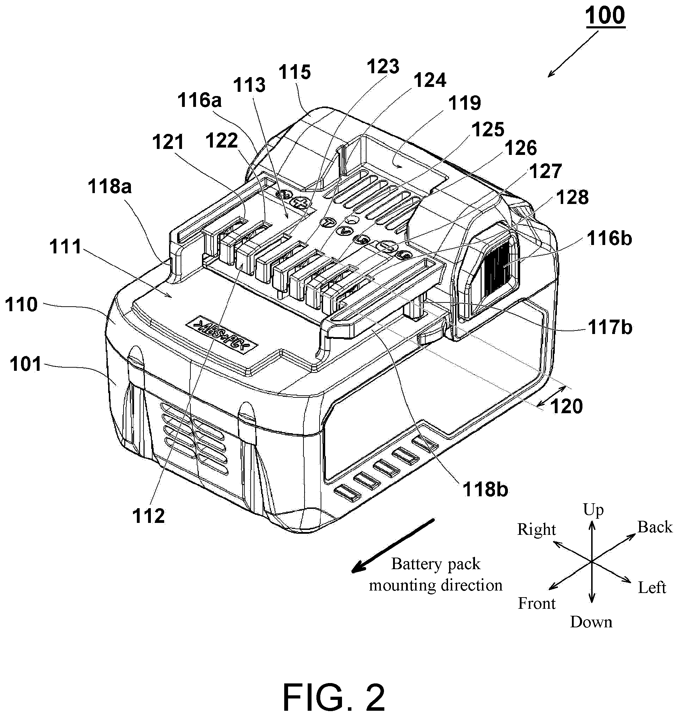

The terminal part 30 is formed to have a vertical surface 30a and a horizontal surface 30b which are abutting surfaces in the mounting direction (front-back direction), and the horizontal surface 30b is a surface which is adjacent to and faces an upper step surface 113 (will be described later in Fig. 2) when the battery pack 100 is mounted. A curved part 12 that abuts on a raised part 115 of the battery pack 100 is formed on the front side of the horizontal surface 30b, and a projection part 14 is formed in the vicinity of the center of the curved part 12 in the left-right direction. The projection part 14 also serves as a boss for screwing the housing of the electric tool main body 1 formed being divided into two in the left-right direction, and also serves as a stopper that limits the relative movement of the battery pack 100 in the mounting direction.

Fig. 2 is a perspective view of the battery pack 100 according to the example of the present invention. The battery pack 100 accommodates ten lithium ion battery cells having a rated voltage of 3.6 V in a case configured with an upper case 110 and a lower case 101. The part extending to the rear side from the step part 112 in front of the battery pack 100 on the upper step surface 113 becomes a slot group arrangement area 120. A lower step surface 111 and the upper step surface 113 of the upper case 110 are formed in a stepped shape, and a plurality of slots 121 to 128 extending to the rear side from the connecting part thereof is formed. The slots 121 to 128 are parts which are notched to have a predetermined length in the battery pack mounting direction, and inside the notched parts, a plurality of connection terminals that can be fitted to the electric tool main body 1 or an apparatus-side terminal of an external charging device (not shown) is arranged. In the slots 121 to 128, the slot 121 on the side closer to the right side surface of the battery pack 100 serves as an insertion port of the positive electrode terminal (C+ terminal) for charging, and the slot 122 serves as an insertion port of the positive electrode terminal (+ terminal) for discharging. Further, the slot 127 on the side closer to the left side surface serves as an insertion port for the negative electrode terminal (- terminal). Between the positive electrode terminal and the negative electrode terminal (power terminal group), a plurality of signal terminals for transmitting signals to the battery pack 100, the electric tool main body 1, and the external charging device (not shown) is arranged, and here, four slots 123 to 126 for signal terminals are provided between the power terminal groups. Furthermore, the slot 123 is a spare terminal insertion port, and no terminal is provided in the present example.

The slot 124 is an insertion port for a T terminal for outputting a signal that is identification information of the battery pack 100 to the electric tool main body or the charging device. The slot 125 is an insertion port for a V terminal for inputting a control signal from an external charging device (not shown). The slot 126 is an insertion port for an LS terminal for outputting battery temperature information by a thermistor (temperature sensitive element) (not shown) provided in contact with the cell. On the left side of the slot 127 which is the insertion port of the negative electrode terminal (- terminal), a slot 128 for the LD terminal which outputs an abnormal stop signal by the battery protection circuit (not shown) included in the battery pack 100 is further provided.

Two rail parts (rail grooves) 118a and 118b are formed on the side surface of the upper step surface 113 of the battery pack 100. The rail parts 118a and 118b are formed such that the longitudinal direction is parallel to the mounting direction of the battery pack 100. In the groove parts of the rail parts 118a and 118b, the front end part is an open end, and the rear end part is a closed end connected to the front wall surface of the raised part 115. On the rear side of the upper step surface 113, a raised part 115 formed so as to be raised is formed. A recessed stopper part 119 is formed in the vicinity of the center of the raised part 115. The stopper part 119 becomes a contact surface of the projection part 14 (refer to Fig. 1) when the battery pack 100 is mounted on the battery pack mounting part 2c. When the battery pack 100 is mounted at a predetermined position on the electric tool main body 1, a plurality of terminals (apparatus-side terminals) arranged on the electric tool main body 1 comes into contact with a plurality of connection terminals arranged on the battery pack 100, to be in a conducting state. When removing the battery pack 100 from the electric tool main body 1, by pushing latches 116a and 116b on both the left and right sides, the claw-shaped locking parts 117a (not shown in the drawing) and 117b move inward and the locked state is negated, and thus, in this state, the battery pack 100 is moved to the side opposite to the mounting direction.

By devising the terminal configuration on the battery pack 100 side and the terminal configuration on the terminal part 30 on the apparatus side of the electric tool main body 1 for 36 V, the battery pack 100 of the present example can be mounted on the electric tool main body for 18 V and the electric tool main body 1 for 36 V. At the time of this mounting, when the battery pack 100 is mounted on the electric tool main body for 18 V, the output of the battery pack 100 is automatically set for 18 V, and when the battery pack 100 is mounted on the electric tool main body 1 for 36 V, the output of the battery pack 100 is automatically set for 36 V. In general, the output voltage of the battery pack is fixed, but in the battery pack 100, a plurality of cell units is provided in a case accommodating the battery cells, and it is possible to select whether to output the voltage while the cell units are connected to each other in series or to output the voltage while the cell units are connected to each other in parallel depending on the connection means, and thus it is possible to support apparatuses having different voltages. This battery pack eliminates the need to prepare different types of battery packs when using a plurality of electrical apparatuses. Further, no special operation is required when switching the voltage, and there is no risk of an operation error.

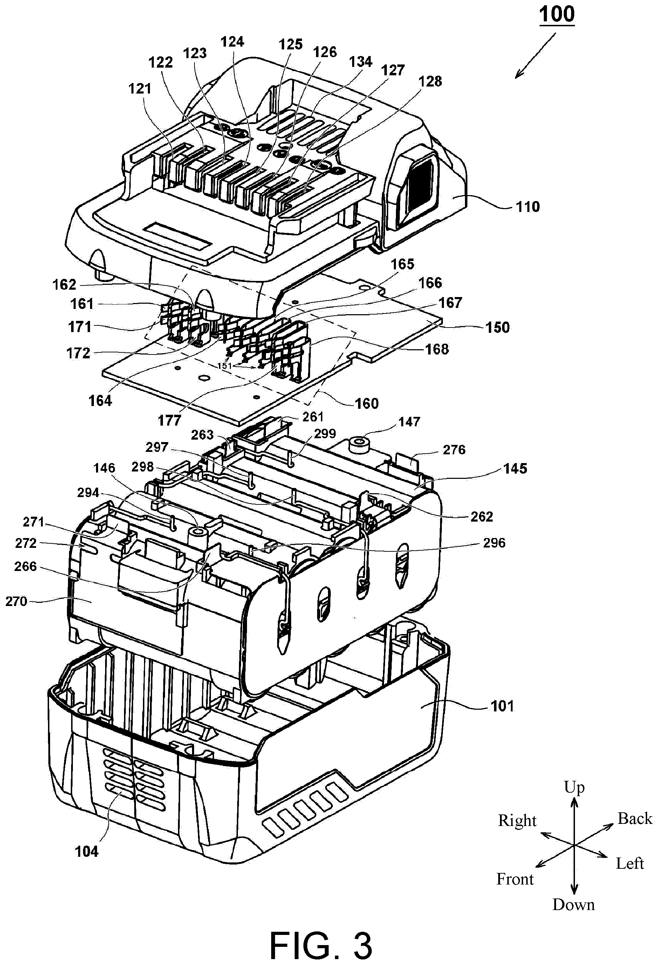

Fig. 3 is a developed perspective view of the battery pack 100 of Fig. 2. The housing of the battery pack 100 is formed by the upper case 110 and the lower case 101 that can be separated in the up-down direction, and ten battery cells are accommodated in the internal space of the lower case 101. The ten battery cells are provided in two sets of five cell units, in which the cell units are connected to each other in series. A rated output of 36 V (high voltage output) can be obtained by connecting these two cell units in series, and a rated output of 18 V (low voltage output) can be obtained by connecting these cell units in parallel. In order to realize automatic switching of the output voltage, two positive electrode terminals (162, 172) connected to each of the positive electrodes of the first cell unit and the second cell unit, are provided, two negative electrode terminals (167, 177) connected to each of the negative electrodes of the first cell unit and the second cell unit, are provided, and when mounting the battery pack 100 on the electrical apparatus main body for low voltage, the parallel connection output (low voltage) of the first cell unit and the second cell unit is output from the battery pack. Similarly, when the battery pack 100 is mounted on the electrical apparatus main body for high voltage (for example, electric tool main body 1), the series connection output (high voltage) of the first cell unit and the second cell unit is output from the battery pack 100.

The upper case 110 and the lower case 101 are fixed by four screws (not shown). A plurality of battery cells (not shown) is fixed by a separator 145 made of a non-conductor such as synthetic resin in a state where batteries are stacked five each in two stages. The separator 145 holds a plurality of battery cells such that only both the left and right sides, which are both ends of the battery cell, are open.

A circuit board 150 is fixed on the upper side of the separator 145. A slot group arrangement area 160 is provided slightly in front of the center of the circuit board 150 in the front-rear direction, and here, a plurality of connection terminals (161, 162, 164 to 168, 171, 172, 177) is arranged in the horizontal direction and fixed by soldering, and electrical connection is made between these connection terminals and a circuit pattern (not shown). On the circuit board 150, various electronic elements (not shown here) such as a battery protection IC, a microcomputer, a PTC thermistor, a resistor, a capacitor, a fuse, and a light emitting diode are mounted. The material of the circuit board 150 is a printed board on which pattern wiring is printed by a conductor such as a copper foil on a board impregnated with a resin having insulating properties for the material, and a single-layer board, a double-sided board, or a multilayer board can be used. In the present example, the wiring pattern is formed on the upper surface (a surface on the upper side which is a front surface and can be seen from Fig. 3) and the lower surface (back surface) of the circuit board 150 by using the double-sided substrate.

In the connection terminal group of the battery pack 100 of the present example, only two positive electrode terminals and two negative electrode terminals are provided. The number of other connection terminals, that is, the T terminal, the V terminal, the LS terminal, and the LD terminal (none of which are shown) of the slots 124 to 126 and 128 is one, and has the same terminal shape as that of the voltage-fixed battery pack, which has been conventionally used. The positive electrode terminals (161, 162, 171, 172) and the negative electrode terminals (167, 177) are arranged at places significantly separated in the left-right direction, and three signal terminals (the T terminal 164, the V terminal 165, the LS terminal 166) are provided therebetween. In the present example, as components for the power terminals, a total of two sets of arm parts including one set of arm parts extending in the horizontal direction provided on the upper left and right sides, and one set provided on the lower left and right sides, are used. Furthermore, the signal terminals (164 to 166, 168) also have two upper and lower arm parts, which are formed of the same member and have the same electrical potential.

The LD terminal 168 is provided on the left side of the negative electrode terminal pair (167, 177). The LD terminal 168 is also formed so as to have two sets of arm parts, one on the upper side and the other on the lower side. All signal terminals (164 to 166, 168) are fixed by soldering on the back surface side, with each leg part penetrating from the front surface to the back surface through a plurality of attaching holes formed on the circuit board 150. As described above, an electronic element (not shown) is mounted on the circuit board 150, and a plurality of connection terminals is fixed by soldering, and then is fixed to the separator 145 by screws (not shown).

The lower case 101 has a substantially rectangular parallelepiped shape with an open upper surface, and is configured with a bottom surface, and a front surface wall, a rear surface wall, a right side wall, and a left side wall extending in a vertical direction with respect to the bottom surface. The internal space of the lower case 101 has a shape suitable for accommodating the separator 145. A slit 104 is provided substantially at the center of the front surface wall of the lower case. Regarding a slit 104 of the lower case 101, a slit 134 of the upper case 110 is used as an inflow port for taking in outside air from the slit 104 of the lower case 101 into the internal space of the battery pack 100 when charging with the charging device, and cooling the inside of the battery pack 100, and then allowing the cooling air to flow into the charging device through the slit 134 of the upper case 110, and the slit 104 of the lower case 101 is used as an intake port of the cooling air. The flow of the cooling air may be reversed.

The connection (connection between the battery cell and the circuit board 150) from the battery cell side to the output circuit board 150 is performed through lead-out tabs 261, 266, 271, and 276 for connection extending in the upward direction in a plate shape. Further, the end parts 294 and 296 to 299 of the lead wire from the intermediate connection point of the battery cells connected in series are arranged to extend in the upward direction and are soldered onto the circuit board 150. Furthermore, the intermediate lead-out tabs 262 and 263 from the intermediate connection points of the battery cells connected to each other in series are connected to the circuit board 150, and arranged to extend in the upward direction. Screw bosses 146 and 147 for fixing the circuit board 150 are formed on the upper side of the separator 145.

The separator 145 is a stack of ten battery cells, five each, in two upper and lower stages. The battery cell is inserted into the cylindrical space of the separator 145. As the ten battery cells, a lithium ion battery cell having a diameter of 18 mm and a length of 65 mm that can be charged and discharged plural times, that is a so-called 18650 size, is used. The axes of each battery cell are stacked such that the battery cells are parallel to each other, the adjacent cells are arranged such that the directions thereof are alternately opposite to each other, and the positive electrode terminal and the negative electrode terminal of the adjacent battery cells are connected to each other by using a metal connection plate (not shown in the drawing). In this manner, the five battery cells are connected to each other to form a cell unit. Here, two sets of cell units are accommodated.

The positive electrode of an upper cell unit 130 is connected to the circuit board 150 by using the lead-out plate on which the lead-out tab 261 is formed, and the negative electrode of the upper cell unit 130 is connected to the circuit board 150 by using the lead-out plate on which the lead-out tab 266 is formed. Similarly, the positive electrode of a lower cell unit 140 is connected to the circuit board 150 by using a lead-out plate 270 on which the lead-out tab 271 is formed, and the negative electrode of the lower cell unit 140 is connected to the circuit board 150 by using the lead-out plate on which the lead-out tab 276 is formed. Here, a narrow part 272 that plays the role of a fuse 182 (refer to Fig. 6 which will be described later) is formed between the lead-out plate 270 and the lead-out tab 271. The narrow part 272 is in a disconnected state by melting when a large current having a threshold I₁ or more continues for a predetermined period of time or longer, and accordingly, the electrical connected state between the lead-out plate 270 and the lead-out tab 271 is negated. Furthermore, although not shown in Fig. 3, the lead-out tab 261 for the upper cell unit 130 also performs the function of a fuse 152 (refer to Fig. 6 which will be described later) by forming a narrow part.

(A) of Fig. 4 is a partial perspective view showing shapes of the positive electrode terminals (162 and 172) and the negative electrode terminals (167 and 177) in the present example, and a view showing a connection circuit at the time of high voltage output, and (B) of Fig. 4 is a partial perspective view showing a connection status between the terminal part 30 of the high-voltage electrical apparatus main body and the terminal on the battery pack 100 side. As shown in (A) of Fig. 4, in the connection terminal group of the battery pack 100 of the present example, only two positive electrode terminals and two negative electrode terminals are provided. The upper positive electrode terminal 162 and the lower positive electrode terminal 172 are arranged side by side in the slot 122 (refer to Fig. 3). The upper positive electrode terminal 162 and the lower positive electrode terminal 172 are formed by pressing a metal plate, the leg parts are penetrated through the circuit board 150, and the penetrated side is fixed by soldering or the like. The upper positive electrode terminal 162 and the lower positive electrode terminal 172 are arranged at a distance from each other, are in a physically non-contact state, and are electrically in a non-conducting state in the battery pack 100. Similarly, in the slot 127 (refer to Fig. 3), the upper negative electrode terminal 167 and the lower negative electrode terminal 177 are arranged side by side. The upper negative electrode terminal 167 and the lower negative electrode terminal 177 are arranged at a distance from each other, are in a physically non-contact state, and are electrically in a non-conducting state in the battery pack 100. The upper positive electrode terminal 162 and the upper negative electrode terminal 167, and the lower positive electrode terminal 172 and the lower negative electrode terminal 177 are the same metal components.

Inside the battery pack 100, the lower cell unit 140 in which five lithium ion battery cells are connected to each other in series and the upper cell unit 130 in which the battery cells are connected to each other in series are accommodated, a positive electrode of the upper cell unit 130 is connected to the upper positive electrode terminal 162 corresponding to a first positive electrode terminal, and a negative electrode of the upper cell unit 130 is connected to the lower negative electrode terminal 177 corresponding to a first negative electrode terminal. Similarly, the positive electrode of the lower cell unit 140 is connected to the lower positive electrode terminal 172 corresponding to a second positive electrode terminal, and a negative electrode of the lower cell unit 140 is connected to the upper negative electrode terminal 167 corresponding to a second negative electrode terminal. Furthermore, the upper and lower sides of the cell unit referred to here do not refer to the physical position of whether the battery cell is in the upper stage or the lower stage in the lower case 101, but when two cell units are connected in series, the cell unit positioned on the ground side is referred to as "lower cell unit", the cell unit positioned on the higher voltage side when connected in series is referred to as "upper cell unit", and the electrical potential is the reference.

In such a form of the battery pack 100, when the positive electrode input terminal 32 on the electric tool main body 1 side is connected to the upper positive electrode terminal 162, the negative electrode input terminal 37 is connected to the upper negative electrode terminal 167, and the lower positive electrode terminal 172 and the lower negative electrode terminal 177 are electrically connected to each other by a short bar included in the terminal part 30 on the electric tool main body 1 side as shown by a dotted line 39, the output of the series connection of the lower cell unit 140 and the upper cell unit 130, that is, the rated voltage of 36 V is output from the battery pack 100 to a loading device 40 of the electric tool main body 1.

(B) of Fig. 4 is a view showing a connection relationship between the terminal part 30 of the electric tool main body 1 having a rated voltage of 36 V and the connection terminals (162, 167, 172, 177) on the battery pack 100 side. The terminal part 30 is provided in the battery pack mounting part 2c of the electric tool main body 1. The terminal part 30 is provided with apparatus-side terminals (32, 39a, 34 to 36, 37, 39b, 38) corresponding to the slots 121 to 128 (refer to Fig. 2) of the battery pack 100, and is fixed to be cast into a synthetic resin base 31. A short circuit 39 is a short bar made of a metal plate, and as shown in Fig. 4, can be formed by casting a metal plate that is bent in a U-shape into the synthetic resin base 31 together with other apparatus-side terminals such as a positive electrode input terminal 32 or a negative electrode input terminal 37. One end part of the U-shaped bent metal plate serves as a short circuit terminal 39a, and the other end part serves as a short circuit terminal 39b. The connection terminal part on the upper side of the base 31 and a part which is the plate-shaped terminal part on the lower side and has the same reference numeral are configured with an electrically conductive metal plate. Here, the apparatus-side terminal is not provided at the position corresponding to the slot 123 (refer to Fig. 3). As input terminals for electric power, the positive electrode input terminal 32 and the negative electrode input terminal 37 for receiving power are made in a smaller size than other terminals, and are provided on the upper sides of the short circuit terminals 39a and 39b, respectively. The positive electrode input terminal 32 and the short circuit terminal 39a are not conducting. In addition, the negative electrode input terminal 37 and the short circuit terminal 39b are not conducting.

When the battery pack 100 is mounted, the positive electrode input terminal 32 is fitted only to the upper positive electrode terminal 162, and the negative electrode input terminal 37 is fitted only to the upper negative electrode terminal 167. Further, since the terminal part 30 of the electric tool main body 1 is provided with small short circuit terminals 39a and 39b for short-circuiting the lower positive electrode terminal 172 and the lower negative electrode terminal 177, the lower positive electrode terminal 172 and the lower negative electrode terminal 177 are electrically connected to each other by the short circuit 39 when the battery pack 100 is mounted.

The positive electrode input terminal 32 is configured with a terminal part formed in a flat plate, which is a part that fits to the upper positive electrode terminal 162, and a terminal part that protrudes to the upper part of the base 31, which is a part that is connected to the circuit board side on the electric tool main body 1 side. The positive electrode input terminal 32 is cast into a base 31 made of synthetic resin. The negative electrode input terminal 37 is the same as the positive electrode input terminal 32, and the height of the terminal plate is set to be slightly smaller than half of that of the other terminals (34 to 36, 38) plates. The other terminals (34 to 36, 38) are terminals for signal transmission. Recesses 31a and 31b for being sandwiched by the housing are provided on the front side and the rear side of the synthetic resin base 31 of the terminal part 30.

In (B) of Fig. 4, when the battery pack 100 is mounted, and the battery pack 100 is relatively moved with respect to the electric tool main body 1 along the insertion direction (sliding direction), the positive electrode input terminal 32 and the short circuit terminal 39a are inserted into the inside through the same slot 122 (refer to Fig. 4), and are fitted into the upper positive electrode terminal 162 and the lower positive electrode terminal 172, respectively. At this time, the positive electrode input terminal 32 is press-fitted between the arm parts 162a and 162b of the upper positive electrode terminal 162 so as to expand between the fitting parts of the upper positive electrode terminal 162, and the short circuit terminal 39a is press-fitted so as to expand between the arm parts 172a and 172b of the lower positive electrode terminal 172. Similarly, the negative electrode input terminal 37 and the short circuit terminal 39b are inserted into the inside through the same slot 127 (refer to Fig. 2), and are fitted into the upper negative electrode terminal 167 and the lower negative electrode terminal 177, respectively. At this time, the negative electrode input terminal 37 is press-fitted between arm parts 167a and 167b of the upper negative electrode terminal 167 so as to expand between the fitting parts. Furthermore, the short circuit terminal 39b is press-fitted so as to expand between arm parts 177a and 177b of the lower negative electrode terminal 177. As described above, by realizing the connection form of (B) of Fig. 4, the output of the series connection of the lower cell unit 140 and the upper cell unit 130, that is, the rated voltage of 36 V is output from the battery pack 100.

(A) and (B) of Fig. 5 are views showing a connected state when the battery pack 100 of the present example is mounted on a conventional electric tool main body (not shown) having a rated voltage of 18 V. The terminal part 80 is provided in the battery pack mounting part of the electric tool main body. Connection terminals such as a positive electrode input terminal 82 and a negative electrode input terminal 87 are fixed to the terminal part 80 so as to be cast into a synthetic resin base 81. The other apparatus-side terminals (84 to 86, 88) are the same as the apparatus-side terminals (34 to 36, 38) fixed to the terminal part 30 of Fig. 4. When the battery pack 100 is attached to the electric tool main body, the terminal part of the positive electrode input terminal 82 is fitted and press-fitted so as to expand the open end parts of both the upper positive electrode terminal 162 and the lower positive electrode terminal 172, an area at a part on the upper side of the terminal part of the positive electrode input terminal 82 comes into contact with the upper positive electrode terminal 162, and an area at a part on the lower side comes into contact with the lower positive electrode terminal 172. By simultaneously fitting the terminal part of the positive electrode input terminal 82 to the arm parts 162a and 162b of the upper positive electrode terminal 162 and the arm parts 172a and 172b of the lower positive electrode terminal 172, the two positive electrode terminals (162 and 172) are in a short circuit state. Similarly, the terminal part of the negative electrode input terminal 87 is fitted and press-fitted so as to expand the open end parts of both the upper negative electrode terminal 167 and the lower negative electrode terminal 177, an area at a part on the upper side of the terminal part of the negative electrode input terminal 87 comes into contact with the upper negative electrode terminal 167, and an area at a part on the lower side comes into contact with the lower negative electrode terminal 177. By simultaneously fitting the terminal part of the negative electrode input terminal 87 to the arm parts 167a and 167b of the upper negative electrode terminal 167 and the arm parts 177a and 177b of the lower negative electrode terminal 177, the two negative electrode terminals (167 and 177) are in a short circuit state, and the output of the parallel connection of the lower cell unit 140 and the upper cell unit 130, that is, the rated voltage of 18 V is output to the electric tool main body. The terminal part described above corresponds to a connection unit.

As described above, the output of the battery pack 100 is automatically switched by mounting the battery pack 100 of the present example to either the electric tool main body for 18 V or the electric tool main body 1 for 36 V. Since this voltage switching is automatically performed according to the shape of the terminal part on the electric tool main body side, there is no concern about occurrence of voltage setting error.

When the battery pack 100 is charged using an external charging device (not shown), it is possible to perform charging with the same charging device as that of the conventional 18 V battery pack. In the slot 121 of the battery pack 100, the positive electrode terminals 161 and 171 for charging (refer to Fig. 3) having the same shape as that of the upper positive electrode terminal 162 and the lower positive electrode terminal 172 are provided, and thus, instead of the positive electrode terminals (162, 172) for discharging, the positive electrode terminals 161 and 171 for charging may be connected to the positive electrode terminals of the external charging device (not shown). As described above, the battery pack 100 can be charged by using the charging device for 18 V with the lower cell unit 140 and the upper cell unit 130 connected in parallel.

Fig. 6 is a block diagram showing an internal circuit of the battery pack 100 of the present example. Here, only the basic components for describing the connection status of a control unit 190 and protection ICs 151 and 181 to the upper cell unit 130 and the lower cell unit 140 are shown, and other related circuits, particularly, circuits for communicating with the signal terminal on the main body apparatus side are not shown. As shown in Fig. 4, the battery pack 100 includes the upper positive electrode terminal (upper +) 162, the lower positive electrode terminal (lower +) 172, the upper negative electrode terminal (upper -) 167, the lower negative electrode terminal (lower -) 177, the LS terminal 166, and the LD terminal 168. In addition to these, the battery pack 100 is provided with the upper positive electrode terminal (upper C +) 161 and the lower positive electrode terminal (lower C +) 171 for charging, and other signal terminal groups (T terminal, V terminal), but here, these are omitted in the drawings. The output of the upper cell unit 130 is connected to the upper positive electrode terminal 162 and the lower negative electrode terminal 177. In other words, the positive electrode (+ output) of the upper cell unit 130 is connected to the upper positive electrode terminal 162, and the negative electrode (- output) of the upper cell unit 130 is connected to the lower negative electrode terminal 177. Similarly, the positive electrode (+ output) of the lower cell unit 140 is connected to the lower positive electrode terminal 172, and the negative electrode (- output) of the lower cell unit 140 is connected to the upper negative electrode terminal 167.

The LS terminal 166 corresponds to a charge prevention signal output terminal, and the LD terminal 168 corresponds to a discharge prevention signal output terminal. In addition, a discharge prevention signal output circuit that electrically connects the control unit 190 and the LD terminal 168 is provided. In Fig. 6, the discharge prevention signal output circuit includes the control unit 190, a line (second circuit part) connecting the control unit 190 and the switching element 191 to each other, a line (third circuit part) connecting the switching element 191 and the LS terminal 166 to each other, the switching element 191, and the LD terminal 168. As will be described later, the discharge prevention signal output circuit outputs a discharge prevention signal 187 (LD signal 250) so as to stop (prevent) the discharge of the battery pack 100 when a chattering phenomenon occurs, and then maintains a discharging prevented state such that the battery pack 100 cannot be discharged even when the battery pack 100 is connected to another electrical apparatus main body. In addition, a charge prevention signal output circuit that electrically connects the control unit 190 and the LS terminal 166 is provided. In Fig. 6, the charge prevention signal output circuit includes the control unit 190, a line (first circuit part) connecting the control unit 190 and the LS terminal 166 to each other, and the LS terminal. As will be described later, the charge prevention signal output circuit outputs a charge prevention signal 188 when the chattering phenomenon occurs during discharging in a state where the battery pack 100 is connected to the electrical apparatus main body, and the battery pack 100 cannot be charged even when the battery pack 100 is connected to the charging device 300. In other words, the control unit 190 is configured to output the discharge prevention signal 187 (LD signal 250) and also output the charge prevention signal 188 (LS signal 255) when the chattering phenomenon is detected.

The upper cell unit 130 and the lower cell unit 140 are provided with the protection ICs 151 and 181 for monitoring the voltage of the battery cell, respectively, and the control unit 190 having a microcomputer is connected to these protection ICs 151 and 181. The protection IC 151 is an integrated circuit which is commercially available as a "protection IC for a lithium ion battery" and executes a cell balance function, a cascade connection function, and a disconnection detection function in addition to an overcharge protection function and an overdischarge protection function, by inputting the end-to-end voltage of each battery cell of the upper cell unit 130. Further, when the voltage of any battery cell of the upper cell unit 130 decreases to a predetermined lower limit value and becomes an overdischarged state, the protection IC 151 outputs a signal (high signal) 156 indicating overdischarge to the control unit 190. Further, when the battery pack 100 is mounted on an external charging device (not shown) and charging is performed, in a case where it is detected that the voltage of one of the battery cells of the upper cell unit 130 exceeds a predetermined upper limit value to be in an overcharged state, the protection IC 151 outputs an overcharge signal (high signal) 155 indicating the overcharged state to the control unit 190.

The protection IC 181 is connected to the lower cell unit 140. The protection IC 181 monitors the voltage of each battery cell in the lower cell unit 140, and in a case where a state (overdischarged state) where the voltage of one of the battery cells decreases to a predetermined lower limit value is detected, the protection IC 181 outputs an overdischarge signal (high signal) 186 to the control unit 190. Further, when the battery pack 100 is mounted on an external charging device (not shown) and charging is performed, in a case where it is detected that the voltage of one of the battery cells of the lower cell unit 140 exceeds a predetermined upper limit value, the protection IC 181 outputs an overcharge signal (high signal) 185 indicating the overcharged state to the control unit 190.

The control unit 190 is further provided in the circuit of the lower cell unit 140, that is, in the circuit between the lower positive electrode terminal 172 and the upper negative electrode terminal 167. In other words, while the protection IC 151 is disposed in the circuit provided in parallel with the upper cell unit 130, the control unit 190 including the protection IC 181 and the microcomputer (micro controller unit) is disposed in the circuit provided in parallel with the lower cell unit 140. The output (overdischarge signal 156, overcharge signal 155) from the protection IC 151 and the output (overdischarge signal 186, overcharge signal 185) from the protection IC 181 are input to the control unit 190. The control unit 190 monitors the voltages of the upper cell unit 130 and the lower cell unit 140. The voltage adjustment of each battery cell included in the upper cell unit 130 and the lower cell unit 140 is performed by the respective protection ICs 151 and 181. The control unit 190 monitors the current value and the cell temperature, and also monitors the state of the upper cell unit 130 and the lower cell unit 140 to integrate and control the operating conditions of both, for example, the voltage balance between the cell units is adjusted.

A shunt resistor 189 for measuring the current value is provided on the ground side of the lower cell unit 140, and the current detection circuit 184 detects the current value by measuring the end-to-end voltage of the shunt resistor 189. The output of the current detection circuit 184 is input to the control unit 190. When the electric tool main body 1 needs to be stopped urgently, the control unit 190 transmits the discharge prevention signal 187 to the electrical apparatus main body side through the LD terminal 168. Further, the control unit 190 outputs the charge prevention signal 188 to a charging device (not shown) through the LS terminal 166.

The control unit 190 is provided with a storage device (not shown), and appropriately stores software, parameters, and the like operated by a microcomputer (not shown). Further, cell temperature detecting means 193 is connected to the control unit 190. Outputs of a plurality of temperature sensors (not shown) is connected to the cell temperature detecting means 193. As the temperature sensor, a thermistor can be used, and one or more thermistors are provided at a location in contact with or close to the upper cell unit 130, and another thermistor is provided at a location in contact with or close to the lower cell unit 140. The cell temperature detecting means 193 measures the temperatures of each of the upper cell unit 130 and the lower cell unit 140 by utilizing the change in the electric resistance of the thermistor with respect to the temperature change, and outputs the temperature to the control unit 190.

The power source for driving the control unit 190 is generated by the power supply circuit (power supply part) 180 connected to the lower cell unit 140, and a reference voltage VDD is supplied to the control unit 190. Since the battery pack 100 of the present example is a voltage switching type for 18 V and 36 V, when the control unit 190 (microcomputer) is mounted on the protection circuit on the upper cell unit 130 side, the ground potential of the control unit 190 changes when the two cell units are connected to each other in series and in parallel. Therefore, the power supply circuit 180 is provided on the lower side (ground side) such that the ground potential of the power supply circuit 180 does not change. By disposing the control unit 190, the control unit 190 can be operated stably even when the output voltage is switched between the rated voltage of 18 V and 36 V. The control unit 190 can switch between holding and negating the power supply voltage (VDD) applied to itself, and can switch between a normal operation state (normal mode), an operation function limited state (so-called sleep mode), and an operation stop state (so-called shutdown).

The output of an upper voltage detection circuit 157 connected to the upper positive electrode terminal 162 is input to the control unit 190. This output indicates the potential of the upper cell unit 130 when the battery pack 100 is not mounted on the electric tool main body 1 or an external charging device (not shown). Meanwhile, when mounted on the electric tool main body 1 for low voltage (18 V), the upper positive electrode terminal 162 and the lower positive electrode terminal 172 are connected to each other, and thus each positive electrode of the upper cell unit 130 and the lower cell unit 140 have the same potential, and each negative electrode has the same potential. From this, by comparing the potential of the upper positive electrode terminal 162 with the potential of the lower positive electrode terminal 172, the control unit 190 can determine whether the battery pack 100 is not mounted, is mounted on the apparatus main body for low voltage, or is mounted on the apparatus main body for high voltage. Furthermore, in order to detect the potential of the lower positive electrode terminal 172, the control unit 190 may be configured to be capable of acquiring the positive electrode potential of the highest-order battery cell among the battery cells in the lower cell unit 140. When the power supply from the battery pack 100 must be stopped, for example, when an excessive current during discharge, a decrease (overdischarge) in cell voltage during discharge, an abnormal rise (overtemperature) in cell temperature, and the like occur, by transmitting the discharge prevention signal 187 to the electric tool main body side through the control unit 190, the operation of the electric tool main body can be stopped quickly. The transmission of the discharge prevention signal 187 is performed by dropping the LD terminal 168 to the ground potential by conducting the switching element 191 by outputting a high signal from the I/O port of the control unit 190.

The state of the control unit 190 has three stages of normal, sleep, and shutdown. Normal is a state where the control unit 190 is always activated. Sleep is a mode in which the operation of the functions of the external circuit or the control unit 190 itself is limited to the minimum, and the control unit 190 is activated intermittently by itself, for example, an operation such as stopping for 240 milliseconds after 10 milliseconds of activation is repeated. Shutdown is a state where the reference voltage VDD is not supplied at all, and the control unit 190 is completely stopped. The control unit 190 can operate not only when the battery pack 100 is mounted on the electric tool main body but also when the battery pack 100 is not mounted. However, when the electric tool has not been used for a certain period of time when the battery pack 100 is not mounted or when the battery pack 100 is mounted, for example, when the trigger operation is not performed for approximately 2 hours after the trigger operation of the electrical apparatus main body is completed, the control unit 190 shifts to the sleep state. When the trigger switch 4 of the electric tool main body is pulled again and a current flows through a motor 3 (refer to Fig. 7), the control unit 190 detects an increase in the current value detected by the current detection circuit 184 and is restored to the normal state.

Fig. 7 is a circuit diagram of the electric tool main body 1 (electrical apparatus for high voltage) on which the battery pack 100 is mounted. The right side is the battery pack 100, and the specific circuit configuration is the same as that shown in Fig. 6, and thus the repeated description will be omitted. As shown in Fig. 4, the terminal part 30 (refer to Fig. 4) of the electric tool main body 1 having a rated voltage of 36 V includes the short circuit 39 for short-circuiting the lower positive electrode terminal 172 and the lower negative electrode terminal 177. In this manner, by providing the terminal part 30 (refer to Fig. 4) having the short circuit 39 in the electric tool main body 1, a series connection circuit of the upper cell unit 130 and the lower cell unit 140 can be established only by mounting the battery pack 100 of the present example having two positive electrode terminals (162, 172) and two negative electrode terminals (167, 177). In other words, only the upper positive electrode terminal 162 positioned on the upper side is connected to the positive electrode input terminal 32 of the electric tool main body 1, and only the negative electrode terminal 167 positioned on the upper side is connected to the negative electrode input terminal 37. Further, the lower positive electrode terminal 172 positioned on the lower side and the lower negative electrode terminal 177 positioned on the lower side are connected to each other by the short circuit 39.

The electric tool main body 1 includes a control unit 20 for controlling the rotation of the motor 3. A microcomputer is included in the control unit 20, and a reference voltage VDD1 (5 V or 3.3 V) for driving is supplied to the control unit 20. The reference voltage VDD1 is supplied by the power supply circuit 21 that inputs the end-to-end voltage of the positive electrode input terminal 32 and the negative electrode input terminal 37. The voltage detection circuit 22 measures the voltage (voltage of the battery pack 100) between the positive electrode input terminal 32 and the negative electrode input terminal 37, and the output thereof is output to the control unit 20. The voltage (V +) of the positive electrode input terminal 32 is input from the voltage detection circuit 22 to the input port of the control unit 20. The control unit 20 outputs a signal for turning on the switching element 25 through the output port (A/D output terminal). The switching element 25 is a switch for stopping the motor 3 under the control of the microcomputer of the control unit 20 when the discharge prevention signal 187 (LD signal) is received. A switch (SW) state detection circuit 23 is a circuit that detects whether the state of the trigger switch 4 is on or off, and outputs an on signal to the control unit 20 when the lever of the trigger switch 4 is pulled even a little. The control unit 20 inputs or outputs various signals such as various control signals, input signals from sensors, and control signals to the battery pack 100. The current detection circuit 24 outputs the magnitude of the current value flowing through the motor 3 to the control unit 20 by measuring the end-to-end voltage of the shunt resistor 26.

The LD terminal 38 is connected to the input/output port of the control unit 20 through the resistor 28. The resistor 28 and the control unit 20 are connected to the reference voltage VDD1 through a resistor 27. When the control unit 190 on the battery pack 100 side outputs (sets high) the discharge prevention signal 187, the switching element 191 conducts, and accordingly the LD terminals 168 and 38 (LD signal which will be described later) are dropped to the ground potential. As a result, the input potential of the control unit 20 connected to the resistor 28 changes to the voltage dividing potential of the reference voltage VDD1 by the resistors 27 and 28, and thus the control unit 20 can detect that the battery pack 100 has instructed to prevent discharge. The LD terminal 38 corresponds to a discharge prevention signal input terminal.

Fig. 8 is an input/output circuit diagram when the battery pack 100 of the present example is connected to the external charging device 300. The configuration on the battery pack 100 side is the same as the circuit shown in Fig. 6, but the opposite-side apparatus (electrical apparatus main body) to be mounted is the charging device 300. The charging device 300 includes a control unit 320 having a microcomputer or the like, and charges the battery pack 100 with the output of the power supply circuit 310 in the same manner as the battery pack having a rated voltage of 18 V. Since a positive electrode terminal 332 and a negative electrode terminal 337 of the charging device 300 have the same shape as the positive electrode input terminal 82 and the negative electrode input terminal 87 shown in Fig. 5, when the battery pack 100 is connected to the external charging device 300, the upper cell unit 130 and the lower cell unit 140 are connected to each other in parallel. The power supply circuit 310 rectifies a commercial AC power source 301 to obtain a predetermined direct current and voltage. Although not shown in the drawing, a constant voltage power supply circuit that generates a reference voltage VDD2 for operation of the control unit 320 from the output of the power supply circuit 310 is also included. The magnitude of the current output from the power supply circuit 310 to the battery pack 100 is detected by a current detection circuit 315 using a shunt resistor 311 and output to the microcomputer of the control unit 320. Further, a battery voltage detection circuit 317 is provided, and the voltage between the positive electrode terminal 332 and the negative electrode terminal 337 is measured and output to the microcomputer of the control unit 320. The charging device 300 is provided with an LS terminal 336 and is connected to the LS terminal 166 on the battery pack 100 side. The LS terminal 336 corresponds to a charge prevention signal input terminal.

The charge prevention signal 188 is output from the microcomputer of the control unit 190 of the battery pack 100, and during normal charging, the charge prevention signal 188 is not output until the battery voltage reaches full charge (low signal state), but the charge prevention signal 188 is output when the battery voltage reaches full charge (high signal state). When the potential of the LS terminal 336 becomes high (high signal state), the microcomputer of the control unit 320 stops charging the battery pack 100 by stopping the output of the power supply circuit 310. In the present example, even when the microcomputer of the control unit 190 determines that the battery pack 100 is in an abnormal state before reaching a melted and cut state by the fuses 152 and 182, the charge prevention signal 188 is continuously output. By keeping the charge prevention signal 188 at the high level in this manner, it is possible to prevent the battery pack 100 from being charged. This operation that does not cause charging is the same as the melted and cut state by the fuses 152 and 182 when viewed from the battery cell side. Furthermore, since the charging device 300 does not use the output signal of the LD terminal 168, the LD terminal for receiving the discharge prevention signal output from the charging device 300 side is not provided. However, the microcomputer of the control unit 320 may be configured to be capable of receiving the output signal of the LD terminal 168. Furthermore, the control unit 320 may monitor the voltage of the battery pack 100 through the battery voltage detection circuit 317, and the control unit 320 may perform control to stop charging when the voltage of the battery pack 100 reaches full charge.

Fig. 9 is a view showing each signal waveform when the chattering phenomenon occurs in the battery pack 100 of the present example. The horizontal axis of (A) to (D) of Fig. 9 is time (unit: millisecond), and the time on each horizontal axis is shown together. (A) of Fig. 9 is a waveform diagram of a current value 230, and the vertical axis is a current (unit: A). The current value 230 is detected by the microcomputer of the control unit 190 using the current detection circuit 184. When the operator turns on the trigger switch 4 of the electric tool main body 1 at time t₁, the current significantly rises as shown by the arrow 230a (starting current of a motor 53), and then the amount of current is settled according to the load as shown by the arrow 230b. In this manner, while the current value 230 is flowing, for some reasons, for example, when a short circuit state at a short time interval occurs in the power terminal part, for example, a state where the current value suddenly rises in a short period of time as shown by the arrows 231 to 233 occurs (for example, plural times). These pulsed currents 231 to 233 exceed a first threshold current I₁, but do not exceed a second threshold current h. Here, the first threshold current I₁ is a current threshold (for example, 200A) for detecting the generation of a pulsed abnormal current in the present example, and the second threshold current I₂ is a rated shutdown current (for example, 250A) that affects the melting and cutting of the fuses 152 and 182 in the circuit illustrated in Fig. 6. Here, the pulsed current 231 flows from time t₂, and the current in a state where the first threshold current I₁ is exceeded continues for a duration DT1. Similarly, pulsed currents 232 and 233 due to a short circuit or the like for a short period of time flow from time t₃ and t₄ for the durations DT2 and DT3. Then, as will be described later, at time t₆, the LD signal 250 is output from the battery pack 100, the control unit 20 of the electrical apparatus main body (electric tool main body 1) stops (shuts off) the discharge of the battery pack 100, and accordingly, the current value 230 becomes zero. Furthermore, even when the operator turns off the trigger switch 4 at time t₆ or between times t₅ and t₆, the current value 230 becomes zero.

(B) of Fig. 9 shows a case of a voltage value 240 (unit: volt) between both terminals of the cell unit. Here, the terminal voltage measured by the upper voltage detection circuit 157 is shown. When the battery pack 100 is connected to the 36 V electrical apparatus main body, the total voltage of the upper cell unit 130 and the lower cell unit 140 is shown, and when the battery pack 100 is connected to the 18V electrical apparatus main body, the voltage of the upper cell unit 130 and the lower cell unit 140 in a parallel connection state is shown. The voltage value 240 decreases due to a voltage drop according to the magnitude of the current value 230. When the operator turns on the trigger switch 4 of the electric tool main body 1 at time t₁, the voltage decreases significantly at first as shown by the arrow 240a, and then the voltage decreases according to the current value 230 shown by the arrow 230b, and is settled to the voltage value 240 as shown by the arrow 240b. Furthermore, since the voltage value 240 in the state of the arrow 240b is not in a fully charged state where the battery pack 100 cannot be charged any more (because the voltage or capacity is smaller than that in the fully charged state), charging starts when the battery pack 100 is connected to the charging device 300 in a normal state (for example, the temperature of the battery cell is in a normal range (chargeable temperature range)). In this manner, when a short circuit state corresponding to the arrows 231 to 233 occurs at short time intervals, the voltage value 240 also causes a sudden drop state for a short time as shown by the arrows 241 to 243. In other words, the voltage value 240 continues to be lower than a voltage threshold Vi (first threshold voltage) for a predetermined time DT₁ from time t₂, and then the voltage value 240 is lowered again to be lower than the voltage threshold V₁ at time t₃ when the time period IT₁ has elapsed. When the voltage value 240 continues to be lower than the voltage threshold Vi for a predetermined time DT₂ from time t₃, the voltage value 240 is restored to the state higher than the voltage threshold Vi. After this, the voltage value 240 decreases again to be lower than the voltage threshold Vi at the time t₄ when the time period IT₂ has elapsed. When the voltage value 240 continues to be lower than the voltage threshold V₁ for a predetermined time DT₃ from time t₄, at time t₅, the voltage value 240 is restored to the state higher than the voltage threshold Vi. Then, as will be described later, at time t₆, the LD signal 250 is output from the battery pack 100, the control unit 20 of the electrical apparatus main body (electric tool main body 1) stops (shuts off) the discharge of the battery pack 100, and accordingly, the current value 230 becomes zero, and the voltage returns to the battery voltage when there is no load. Furthermore, even when the operator turns off the trigger switch 4 at time t₆ or between times t₅ and t₆, the voltage returns to the battery voltage when there is no load. Here, the voltage threshold Vi may be a voltage lower than the operating voltage (VDD) of the control unit 190. Otherwise, a value (for example, 1.5 V) smaller than the overdischarge threshold (2.5 V per one battery cell) may be set as the voltage threshold Vi.

(C) of Fig. 9 shows the output state of the LD signal in the present example. The LD signal is a signal for the microcomputer of the control unit 190 to transmit the discharge prevention signal 187 to the electrical apparatus main body side, and is connected to the LD terminal 38 or 88 on the electrical apparatus main body side and the LD terminal 168 on the battery pack 100 side. Here, when the potential (LD signal 250) of the LD terminal is high, the discharge from the battery pack 100 is allowed. The LD signal 250 is transmitted to the microcomputer of the control unit 20 on the connected electrical apparatus main body (electric tool main body 1) side, or is connected to the gate signal of the switching element connected in the power path on the electrical apparatus main body side. When the third voltage value 240 decreases (arrow 243) at time t₅ for a predetermined period of time or longer (for example, for a predetermined time DT₃ from time t₃), the microcomputer of the control unit 190 switches the LD signal 250 from high to low (switches the discharge prevention signal 187 from low to high), and accordingly, the subsequent use of the battery pack 100 is prevented. Furthermore, when the use of the battery pack 100 is prevented, the battery pack 100 cannot be used even when the temperature of the battery pack 100 is within the normal range, for example. The LD signal 250 is switched from high to low at time t₅, and discharge is stopped (the use of the battery pack 100 is prevented) at time t₆ thereafter. The time period between the time t₅ and the time t₆ is a time period (delay time) from the time when the LD signal 250 is output until the control unit 20 of the electrical apparatus main body receives (recognizes) the LD signal 250 and shuts off (stops) the discharge (current). The discharge (current) may be immediately shut off at time t₅.

Corresponding to the switching of the LD signal 250, the LS signal 255 is changed from low to high at time t₅ as shown in (D) of Fig. 9. The LS signal 255 is a signal for allowing the charging operation of the charging device 300. When the LS signal 255 is in a low state, the charging is possible, but when the LS signal 255 is in a high state, the charging operation of the charging device 300 is prevented. The LS signal 255 is the same signal as the charge prevention signal 188. Furthermore, any method may be adopted as the method of outputting the discharge prevention signal and the charge prevention signal and the assignment of the high and low states, and what kind of signal prevents the supply of power to the electrical apparatus main body having a power load, and what kind of signal prevents the supply of power from the charging device is optional. For example, once the use prevented state is achieved and the LD signal 250 or the LS signal 255 is switched to the prevented state, the signal indicating the prevented state may be continuously output (maintained) thereafter (the state of Fig. 9), the output may be stopped after a predetermined period of time after the prevention signal is output, and the prevention signal may be output again when connected to another electrical apparatus main body (electric tool main body or charging device). Otherwise, the control unit 190 may be shut down such that the user cannot negate the shutdown.

When a large current rise and a large voltage drop occur at longer time intervals than the chattering phenomenon, that is, when a short circuit state as shown in Fig. 13 occurs, in addition to the control in Fig. 10, melting and cutting by the fuse 152 and/or 182 causes the power supply from the battery pack 100 to be stopped (shut off). Fig. 13 is a waveform diagram for describing a power shutoff state by the fuses 152 and 182 of the related art. The fuses 152 and 182 are electric components provided to prevent heating, damage, or ignition of the power path and the battery cell due to a large current exceeding the rating flowing to the battery pack 100 and the external electrical apparatus main body side, and usually operate as conductors with almost no resistance. When a current 235 with a rated voltage of 12 or higher flows in the power path as shown by the arrow 236a due to some abnormalities and a current 235 with a rated voltage of 12 or higher continues to flow until time t₁₁ as shown by the arrow 236b, the built-in alloy components are melted and cut by Joule heating. Accordingly, the power path is cut off and made in a non-conducting state to protect the battery pack 100 and the external electrical apparatus main body. The fuse (power fuse) has a rating, the shutoff characteristics change depending on the magnitude exceeding the second threshold current I₂ and the duration thereof, and the time interval from time t₁₀ to time t₁₁ is not constant to some extent. However, since the characteristics of the fuses 152 and 182 are not essential parts of the present invention, further description thereof will be omitted.

Fig. 10 is a flowchart showing a detection procedure of the chattering phenomenon in the battery pack 100 of the present example. The series of procedure shown in Fig. 10 can be executed by software by a program in which the microcomputer included in the control unit 190 is stored in advance. The variables used here are as follows. DT: Duration of the state where the battery voltage is less than the first threshold voltage (predetermined value VI), IT: Time period from the time when the voltage drop when the voltage finally becomes less than the first threshold voltage disappears, n: The number of times of voltage drop when the battery voltage is less than the first voltage threshold Vi

First, the microcomputer determines whether or not the unit voltage of the upper cell unit 130 is lower than the first threshold voltage Vi by using the output of the upper voltage circuit 157 (step 211). Here, when the unit voltage exceeds the first threshold voltage Vi, the counting of DT is cleared to 0 in order to measure the duration of the dropped state (step 212), and when the total voltage is less than the first threshold voltage Vi, the duration DT is counted by incrementing the duration DT by one unit time (step 213). Furthermore, the upper voltage circuit 157 may detect the total voltage of the upper cell unit 130 and the lower cell unit 140, and execute the process of Fig. 10 based on this total voltage. Further, an overall voltage circuit different from the upper voltage circuit 157 may be provided, or a lower voltage circuit may be provided and the process of Fig. 10 may be executed based on the detection result of the lower voltage circuit.

Next, it is determined whether or not the duration DT (refer to Fig. 9) of the pulsed voltage drop at a predetermined time interval has reached a determination threshold DTₘₐₓ (step 214). Here, when the duration DT does not reach the determination threshold DTₘₐₓ, there may be just spire-shaped noise, and thus the process proceeds to step 217 without counting. When the duration DT reaches the determination threshold DTₘₐₓ, it is determined that an abnormality that should be shut off due to a chattering phenomenon or a fuse has occurred, and the counter n that counts the number of times of pulsed voltage drop is incremented by one (step 215), and the counter of IT for measuring the time interval from the time when the voltage drop pulse disappears is cleared to zero (step 216).

In step 217, the time period IT from the time of the last voltage drop, that is, the time when the last voltage drop disappears is incremented by one unit time, and then it is determined whether or not the time exceeds a predetermined threshold T2. (step 218). When the time period IT does not exceed the threshold T2, the process proceeds to step 220, and when the time period IT exceeds the threshold T2 (for example, 1 second), that is, when the intervals between the pulses 241 to 243 exceed the predetermined intervals, and when the pulse group that configures the so-called chattering phenomenon is not formed (generated), the number of times of voltage drop n is cleared to zero (step 219). Since the chattering phenomenon occurs repeatedly a plurality of times in a short period of time, it is determined that the chattering phenomenon has occurred when a plurality of pulses is generated within the threshold T2.

In step 220, it is determined whether or not the counted number of times of voltage drop n is equal to or greater than a predetermined threshold number N. In the example of Fig. 9, when three pulses 241 to 243 appear within a predetermined time interval (within the threshold T2) with the threshold number N = 3, "charge/discharge prevention mode" in which the battery pack 100 is unusable is set, and the mode information is stored in a nonvolatile memory (not shown) included in the control unit 190 (step 221).

By continuously executing the above control while the microcomputer of the control unit 190 is being activated, the microcomputer detects that the chattering phenomenon has occurred in the power supply path from the battery pack 100 to the external electrical apparatus main body, and prevents the use of the battery pack 100 thereafter in a case of the chattering that leads to a short circuit.

Fig. 11 is a flowchart 225 showing a control procedure after the chattering phenomenon is detected in the battery pack 100 of the present example, that is, a control procedure of the control unit 190 after the step 221 of Fig. 10 is executed. The flow of Fig. 11 is executed by the microcomputer included in the control unit 190 after the step 221 of Fig. 10 is executed, is executed in parallel with the flowchart of Fig. 10, and is continuously executed while the microcomputer is being activated. First, the microcomputer determines whether or not the "charge/discharge prevention mode" is set as its own operation mode (step 226). Whether or not the "charge/discharge prevention mode" is set can be determined by the microcomputer reading a flag in a specific area of the nonvolatile memory (not shown) included in the control unit 190. Therefore, even when the battery pack 100 is removed and the microcomputer is shut down, the flowchart of Fig. 11 is executed again when the microcomputer of the battery pack 100 is activated, and accordingly, when the "charge/discharge prevention mode" is set, the prevention mode will be continuously set.

First, in step 226, when the "charge/discharge prevention mode" is not set, the apparatus waits by repeating step 226, and when the "charge/discharge prevention mode" is set, the charge prevention signal (LS signal) 188 is output to the LS terminal 166 (refer to Fig. 6) (step 227), the discharge prevention signal (LD signal) 187 (LD signal 250) is output to the LD terminal 168 (refer to Fig. 6) (step 228), and the process returns to step 226. In this manner, when the chattering phenomenon is determined by the implementation of the present example, the battery pack 100 maintains a use prevented state by keeping the LS signal and the LD signal in the stopped state by the control by the software using the microcomputer, that is, the same state as that when the fuses 152 and 182 are cut. By this control, the battery pack 100 of the present example can detect the initial state of the short circuit occurrence at the stage before the fuses 152 and 182 are melt and cut, and can stop the use of the battery pack 100.

In the present example, it is described that, when the control unit 190 detects an abnormality (chattering phenomenon) in a state where the battery pack 100 is connected to the electric tool main body 1 as the electrical apparatus main body, the battery pack 100 is set to the "charge/discharge prevention mode". However, even when an abnormality is detected in a state where the battery pack 100 is connected to the charging device as the electrical apparatus main body, the battery pack 100 may be set to the "charge/discharge prevention mode". Then, regardless of the type (electric tool main body or charging device) of the electrical apparatus main body to which the battery pack 100 is connected, in a case where the battery pack 100 is set to the "charge/discharge prevention mode", even when the battery pack 100 is temporarily removed and then connected to the external electrical apparatus main body (electric tool main body or the like) or the charging device again, the prevented state is maintained. In other words, the charge and discharging prevented state of the battery pack 100 cannot be negated by the operation by the user. This state is the so-called "permanent use suspension state" or "permanent use prevented state". Furthermore, according to the repair by the manufacturer, it is determined whether the battery pack 100 is continuously unusable or continuously usable by confirming the state of the connection terminal (fuse), and when it is determined that the battery pack 100 is continuously usable, the battery pack 100 may return to the usable state by clearing the flag in a specific area of the nonvolatile memory (not shown) included in the control unit 190. In order to return to this usable state, it is important that a dedicated apparatus owned only by the manufacturer is required and the user cannot clear this.

In the first example, the discharge prevention signal 187 (LD signal 250) and the charge prevention signal 188 (LS signal 255) are output to the connected external electrical apparatus main body through the LD terminal 168 and the LS terminal 166, respectively. However, the battery pack 100 itself may be configured to prevent discharging and charging. In this case, a switching element for preventing discharging corresponding to the switching element 25 may be provided in the discharge path, and the switching element may be shut off by the discharge prevention signal 187 (LD signal 250), that is, the discharge path may be shut off. Furthermore, similarly, a switching element for preventing charging is also provided in the charge path, and when the discharge prevention signal 187 (LD signal 250) due to the chattering phenomenon is output from the control unit 190, the charge prevention signal 188 (LS signal) is output, and the switching element for preventing charging is shut off. With this configuration, even when the battery pack 100 is connected to the charging device 300 after the chattering phenomenon occurs and the discharge is stopped, the switching element for preventing charging in the battery pack 100 is shut off, and thus charging cannot be performed. The configuration of the battery pack configured to prevent discharging and charging by the battery pack 100 itself will be described with reference to Fig. 12.

### Example 2

Fig. 12 is a circuit diagram of a battery pack 100A according to a second example of the present invention. In the second example, as a second shutoff function that acts together with the fuses 152 and 182, shutoff means 153 and 183 using the "self-control protector" set by the microcomputer of the control unit 190 are provided. In the second example, not all of the second shutoff function is controlled by software, but only the activation of the second shutoff function is controlled by software, and after the activation of the second shutoff function, the control by software is unnecessary. The shutoff means 153 shuts off the power path between the upper positive electrode terminal 162 and the upper cell unit 130, and executes the shutoff by an instruction signal from the control unit 190. Here, the "self-control protector" is an electronic element in which a fuse element for shutting off a power path is provided inside and a heater is disposed immediately under the fuse element, and can shut off the circuit caused by melting of the fuse element under the control of software by controlling the energization of the heater by the electric signal from the microcomputer of the control unit 190. As this "self-control protector", for example, a surface mount type fuse manufactured by Dexerials Corporation can be used. The shutoff means 183 is a fuse that shuts off the power path between the lower positive electrode terminal 172 and the lower cell unit 140, and can execute shutoff by an instruction signal from the control unit 190 in the same manner as the shutoff means 153. In this manner, since the shutoff means 153 and 183 using the "self-control protector" are provided in series with the conventional fuses 152 and 182 in the power path, the power supply path can be physically shut off by software control using the "charge/discharge prevention mode" determined in the first example.

The shutoff procedure by the shutoff means 153 and 183 is the same as the flowchart shown in Fig. 10. In the first example, in step 221 of Fig. 10, as the setting of the "charge/discharge prevention mode", the mode information thereof is stored in a nonvolatile memory (not shown) included in the control unit 190. However, instead of or together with this storage of the mode information, the microcomputer melts and cuts the fuse element included in the shutoff means 153 and 183 by outputting a control signal for energizing the heaters of the shutoff means 153 and 183.

In the second example, since the first fuse function by the conventional fuses 152 and 183 having only hardware operation and the second fuse function operated by software are used in combination, even in a predictive short circuit phenomenon such as a chattering phenomenon that does not lead to a shutoff by the conventional fuses 152 and 183, it is possible to effectively protect electric circuits and battery cells.

Although the present invention has been described above based on the examples, the present invention is not limited to the above-described examples, and various modifications can be made without departing from the spirit of the present invention. For example, the battery pack of the present example is not limited to the voltage switching type battery pack, and can be similarly applied to a voltage fixed type battery pack widely used conventionally. Further, the size and type of the battery cell to be used are not limited to the 18650 size lithium ion battery described in the examples, and may be other sizes and types. In addition, the abnormal state (chattering phenomenon) was determined based on the voltage of the battery pack (battery cell) or the current flowing through the battery cell, but the abnormal state may also be determined based on the temperature of the battery pack (battery cell). When a short circuit occurs due to chattering, a large amount of current flows. According to this, the temperature of the battery cell rises, and thus the determination can be made even based on the temperature information. Further, the abnormal state is not limited to the chattering phenomenon, and can be applied as long as the use of the battery pack is supposed to be prevented. For example, an abnormally high temperature of the battery cell can be considered.

### [Reference Signs List]

1 Electric tool main body (electrical apparatus main body)
2 Housing
2a Body part
2b Handle part
2c Battery pack mounting part
3 Motor
4 Trigger switch (trigger SW)
5 Forward/reverse switching lever
8 Tip tool holding part
9 Tip tool
11a, 11b Rail part
12 Curved part
14 Projection part
20 Control unit
21 Power supply circuit
22 Voltage detection circuit
23 Switch state detection circuit
24 Current detection circuit
25 Switching element
26 Shunt resistor
27, 28 Resistor
30 Terminal part
30a Vertical surface
30b Horizontal surface
31 Base
31a, 31b Recess
32 Positive electrode input terminal
37 Negative electrode input terminal
38 LD terminal
39 Short circuit
39a, 39b Short circuit terminal
40 Loading device
53 Motor
80 Terminal part
81 Base
82 Positive electrode input terminal
87 Negative electrode input terminal
90 Loading device
100, 100A Battery pack
101 Lower case
104 Slit
110 Upper case
111 Lower step surface
112 Step part
113 Upper step surface
115 Raised part
116a, 116b Latch
117a, 117b Locking part
118a, 118b Rail part
119 Stopper part
120 Slot group arrangement area
121 to 128 Slot
130 Upper cell unit
134 Slit
140 Lower cell unit
145 Separator
146, 147 Screw boss
150 Circuit board
151 Protection IC (for upper cell unit)
152 Fuse
153 Shutoff means
155 Overcharge signal
156 Overdischarge signal
157 Upper voltage detection circuit
160 Slot group arrangement area
162 Upper positive electrode terminal
162a, 162b Arm part (of upper positive electrode terminal)
164 T terminal
165 V terminal
166 LS terminal
167 Upper negative electrode terminal
167a, 167b Arm part (of the upper negative electrode terminal)
168 LD terminal
172 Lower positive electrode terminal
172a, 172b Arm part (of lower positive electrode terminal)
177 Lower negative electrode terminal
177a, 177b Arm part (of lower negative electrode terminal)
180 Power supply circuit
181 Protection IC (for lower cell unit)
182 Fuse
183 Shutoff means
184 Current detection circuit
185 Overcharge signal
186 Overdischarge signal
187 Discharge prevention signal
188 Charge prevention signal
189 Shunt resistor
190 Control unit
191 Switching element
193 Cell temperature detecting means
230 Current value
231 to 233 Pulsed current
235 Current value
240 Voltage value
241 Pulse
250 LD signal
255 LS signal
261, 262, 266 Lead-out tab
270 Lead-out plate
271, 276 lead-out tab
272 Narrow part
294, 296 to 299 End part (of lead wire)
300 External charging device
301 Commercial AC power source
310 Power supply circuit
311 Shunt resistor
315 Current detection circuit
317 Battery voltage detection circuit
320 Control unit
332 Positive electrode terminal
336 LS terminal
337 Negative electrode terminal
I₁ Threshold current (for determining chattering phenomenon)
I₂ Shutoff threshold current (due to fuse)
T₂ Threshold
V₁ Voltage threshold
VDD, VDD₁, VDD₂ Reference voltage

## Claims

1. A battery pack comprising:
a battery cell;
a connection unit which is electrically connected to the battery cell and is connected to an external electrical apparatus main body; and
a control unit which controls discharging or charging of the battery cell, wherein
the control unit is configured to stop or prevent the discharging or charging of the battery cell in a case of a predetermined abnormal state related to the battery pack, and maintain a stopped or prevented state of the discharging or charging of the battery cell even when the battery pack is no longer in the predetermined abnormal state after the predetermined abnormal state is determined.

2. The battery pack according to claim 1, wherein
the predetermined abnormal state is a case where one or a plurality of physical quantities related to at least one of a voltage of the battery cell, a current flowing through the battery cell, and a temperature of the battery cell satisfies predetermined conditions.

3. The battery pack according to claim 2, wherein
the predetermined conditions include a case where the voltage of the battery cell becomes lower than a predetermined value plural times within a predetermined period of time, or a case where the current flowing through the battery cell becomes equal to or more than a predetermined value plural times within a predetermined period of time.

4. The battery pack according to any one of claims 1 to 3, wherein
the control unit is configured to prevent charging of the battery cell even when the battery pack is removed from the electrical apparatus main body and is connected to a charging device.

5. The battery pack according to claim 4, wherein
the control unit is configured to output a charge prevention signal that prevents charging of the battery cell, or output a discharge prevention signal that prevents discharging of the battery cell, and the battery pack includes a charge prevention signal output circuit for transmitting the charge prevention signal, or a discharge prevention signal output circuit for transmitting the discharge prevention signal.

6. The battery pack according to claim 5, wherein
the connection unit includes a charge prevention signal output terminal that outputs the charge prevention signal transmitted through the charge prevention signal output circuit to the charging device, or a discharge prevention signal output terminal that outputs the discharge prevention signal transmitted through the discharge prevention signal output circuit to the electrical apparatus main body.

7. The battery pack according to claim 5 or 6, wherein
the control unit is configured to maintain an output of the charge prevention signal once the charge prevention signal is output, or output the charge prevention signal again when the charging device is connected, and
the control unit is configured to maintain an output of the discharge prevention signal once the discharge prevention signal is output, or output the discharge prevention signal again when the electrical apparatus main body is connected.

8. The battery pack according to any one of claims 1 to 7, wherein
a fuse is provided between the battery cell and the terminal part, and
two types of shutoff functions are provided including a function of shutting off an overcurrent by the fuse and a function of preventing the charging and discharging by electrical control of the control unit.

9. The battery pack according to any one of claims 1 to 8, wherein
the connection unit includes a signal terminal that outputs the charge prevention signal and the discharge prevention signal from the control unit, and the control unit negates the charge prevention signal and the discharge prevention signal when the abnormal state is temporary, and does not negate the charge prevention signal when the abnormal state continues to occur.

10. The battery pack according to any one of claims 1 to 9, wherein
at least first and second cell units are provided as a cell unit in which a plurality of the battery cells is connected to each other in series, and a series connection state where the first and second cell units are connected to each other in series in a state where the first cell unit is connected on a higher voltage side of the second cell unit, and a parallel connection state where the first and second cell units are connected to each other in parallel, are switched therebetween, and
either the series connection state or the parallel connection state is selected depending on a terminal form of the electrical apparatus main body.

11. A battery pack comprising:
a battery cell;
a connection unit which is electrically connected to the battery cell and is connected to an external electrical apparatus main body; and
a control unit which controls the battery cell, wherein
the control unit prevents charging and discharging of the battery cell when a short circuit for a short period of time due to chattering of the connection unit is detected, and maintains a prevented state even when the battery pack is connected to a charging device that serves as the electrical apparatus main body.

12. A battery pack comprising:
a battery cell;
a connection unit which is electrically connected to the battery cell and is connected to an external electrical apparatus main body; and
a control unit which controls the battery cell, wherein
when an abnormal state occurs in a state of being connected to the external electrical apparatus main body, the control unit is configured to prevent charging and discharging of the battery cell and not to negate a prevented state by an operation of a user.

13. A battery pack comprising:
at least first and second cell units as a cell unit in which a plurality of battery cells is connected to each other in series, wherein
when a short circuit occurs between the cell units, before completely shutting off a discharge path or a charge path of the cell unit, the discharge path or the charge path is shut off under predetermined conditions.

14. The battery pack according to claim 13, further comprising:
a control unit which controls the battery pack; and
a fuse provided in the discharge path or the charge path, wherein
when a short circuit occurs between the cell units, before completely shutting off the discharge path or the charge path by the fuse, the control unit shuts off the discharge path or the charge path, and shutoff by the control unit is not negated by an operation of a user.

15. An electrical apparatus comprising:
the battery pack according to any one of claims 1 to 14; and
the electrical apparatus main body including
a battery pack mounting part where the battery pack is attachable and detachable,
an apparatus-side terminal part connected to the terminal part, and
a loading part driven by electric power supplied from the battery pack.
